Europäisches Patentamt

European Patent Office

Office européen des brevets

(11) Numéro de publication : **0 332 544 B1**

# FASCICULE DE BREVET EUROPEEN

(45) Date de publication du fascicule du brevet :
**22.04.92 Bulletin 92/17**

(51) Int. Cl.⁵ : **C08J 3/02, C08L 83/04, C08K 5/54**

(21) Numéro de dépôt : **89420056.7**

(22) Date de dépôt : **16.02.89**

(54) **Dispersion aqueuse de silicone pouvant réticuler en un élastomère par élimination de l'eau.**

(30) Priorité : **18.02.88 FR 8802191**

(43) Date de publication de la demande :
**13.09.89 Bulletin 89/37**

(45) Mention de la délivrance du brevet :
**22.04.92 Bulletin 92/17**

(84) Etats contractants désignés :
**AT BE CH DE ES FR GB GR IT LI LU NL SE**

(56) Documents cités :
**EP-A- 0 266 729
US-A- 4 244 849**

(73) Titulaire : **RHONE-POULENC CHIMIE
25, quai Paul Doumer
F-92408 Courbevoie Cédex (FR)**

(72) Inventeur : **Feder, Michel
35, rue du Séminaire
Zillisheim F-68720 Illfurth (FR)**
Inventeur : **Jaubert, Jean-Pierre
Fontaine Saint-Martin H2
F-95350 Saint Brice Sous Foret (FR)**
Inventeur : **Ulrich, Jean
Rue de Villeneuve Ternay
F-69360 Saint Symphorien d'Ozon (FR)**

(74) Mandataire : **Fabre, Madeleine-France et al
RHONE-POULENC CHIMIE Direction des
Brevets Secteur Spécialités Chimiques 25,
quai Paul-Doumer
F-92408 Courbevoie Cédex (FR)**

## Description

La présente invention concerne une dispersion aqueuse de silicone pouvant réticuler en un élastomère par élimination de l'eau.

Le brevet US-A-2 891 920 décrit un procédé de polymérisation en émulsion de polydiorganosiloxane en utilisant un catalyseur acide ou basique en présence d'agents tensio-actifs anioniques, cationiques ou non-ioniques. Ce brevet enseigne que les émulsions obtenues sont stables au stockage et sont utiles, après addition de charges, pour faire des peintures donnant un revêtement continu par élimination de l'eau.

Le brevet US-A-3 294 725 décrit en particulier l'utilisation d'acide dodécylbenzène-sulfonique pour polymériser en émulsion des polydiorganosiloxanes. Ce brevet enseigne que pour obtenir des émulsions stables, il est souhaitable de régler le pH de ces émulsions à une valeur de 7 environ. Ce brevet enseigne que l'on peut obtenir à partir de ces émulsions neutralisées, auxquelles on a ajouté de la silice colloïdale et un polyalcoxysilane, un revêtement élastomère.

L'enseignement du brevet US-A-3 360 491 est similaire à celui de US-A-3 294 725, sauf que l'acide dodécylbenzène sulfonique est remplacé par l'hydrogénolaurylsulfate.

Le brevet US-A-3 355 406 décrit entre autre un latex de silicone comportant :
– une suspension aqueuse colloïdale d'un $\alpha,\omega$-(dihydroxy)polydiorganosiloxane,
– une charge comportant nécessairement un silasesquioxane sous forme d'une suspension colloïdale,
– un catalyseur choisi parmi des acides minéraux, des bases fortes, des diacylates de dialkylétain et des péroxydes organiques ou inorganiques.

Le brevet US-A-3 697 469 décrit un procédé particulier de polymérisation en émulsion de polydiorganosiloxanes et indique la possibilité d'ajouter à cette émulsion de la silice colloïdale et un sel d'étain en vue d'obtenir un revêtement élastomère par évaporation d'eau.

Le brevet français FR-A-2 110 358 décrit une émulsion silicone à pH compris entre 6,5 et 9, réticulant en un élastomère conducteur de l'électricté après évaporation de l'eau par incorporation de noir de carbone. L'émulsion, comportant en outre un sel d'étain et un polyalcoxysilane, n'est pas stable au stockage et doit être conservée en deux emballages distincts (émulsion bicomposante).

Les brevets américains US-A-4 221 688, US-A-4 244 849 et français FR-A-2 463 163 décrivent des émulsions silicone stables au stockage et comportant :
– une émulsion d'un polymère $\alpha,\omega$-(dihydroxy)polydiorganosiloxane stabilisée anioniquement,
– une charge siliceuse,
– un sel d'étain,
– éventuellement une charge non renforçante.

La charge siliceuse peut être une silice colloïdale (US-A-4 221 688), du silicate de soude (US-A-4 244 849), ou une silice amorphe en poudre (FR-A-2 463 163).

Par rapport aux émulsions (dispersions) aqueuses connues de l'art antérieur, ces trois brevets enseignent d'une part que pour obtenir une émulsion monocomposante stable au stockage il faut conserver l'émulsion à un pH alcalin supérieur à 8,5 ou 9, de préférence supérieur à 10, et, d'autre part, incorporer à l'émulsion un sel d'étain pour raccourcir à quelques jours l'étape de maturation de l'émulsion nécessaire à l'obtention d'une émulsion capable de réticuler.

Si le réglage à un pH alcalin de l'émulsion a permis d'améliorer la stabilité au stockage par rapport aux émulsions connues conservées à un pH neutre ou basique, il est apparu que l'élastomère obtenu après évaporation de l'eau présente au cours du temps une modification importante de ses propriétés mécaniques en particulier au niveau de l'allongement, qui peut être préjudiciable.

Cette modification des propriétés mécaniques n'est pas, pour l'homme de métier, un phénomène surprenant. Il est en effet bien connu que les polymères silicones dans un milieu alcalin se dépolymérisent en espèce de masse moléculaire peu élevée, y compris en espèce monomère.

Ces coupures des chaînes silicones sont bien entendu à l'origine des modifications des propriétés mécaniques de l'élastomère au cours du temps, c'est-à-dire au cours de son vieillissement.

En outre les émulsions silicones chargées connues, conservées à pH acide ou neutre, présentent au moins l'un des inconvénients suivants :
– elles ne sont pas stables au stockage quand elles sont conditionnées en un seul emballage (composition monocomposante),
– elles présentent un temps de durcissement trop long en un élastomère,
– elles ne sont pas thixotropes.
– elles n'adhèrent que très faiblement sur les supports usuels.

Dans ce qui suit, sauf mentions contraires, les pourcentages et parties sont en poids.

Un but de la présente invention est de proposer une dispersion aqueuse de silicone pouvant réticuler en un élastomère par élimination de l'eau, à température ambiante, qui ne présente pas les inconvénients des émulsions connues, ou sous une forme très atténuée.

Un autre but de la présente invention est de proposer une dispersion silicone du type ci-dessus qui soit stable au stockage, qui réticule correctement et suffisamment rapidement en un élastomère par élimination de l'eau à température ambiante, l'élastomère formé conservant ses propriétés mécaniques lors de son vieillissement.

Un autre but de la présente invention est de proposer une dispersion silicone du type ci-dessus dont l'étape de maturation puisse être effectuée à une température peu élevée (20-60 °C) et pendant une durée inférieure à 72 heures.

Un autre but de la présente invention est de proposer une dispersion silicone du type ci-dessus conduisant à un élastomère présentant en outre une résistance à la flamme améliorée.

Un autre but de la présente invention est de proposer une dispersion silicone du type ci-dessus conduisant à un élastomère présentant une adhérence satisfaisante sur divers supports en particulier sur verre, béton et métaux (acier, aluminium).

Ces buts et d'autres sont atteints par la présente invention qui concerne en effet une dispersion aqueuse de silicone, réticulant en un élastomère par élimination de l'eau dans les conditions ambiantes, caractérisée en ce qu'elle comporte :

(A) - 100 parties d'une émulsion du type huile dans eau d'un α,ω-(dihydroxy)polydiorganosiloxane stabilisée par au moins un agent tensio-actif choisi parmi les agents tensio-actifs anioniques et non-ioniques et leurs mélanges,

(B) - 0,1 à 15 parties calculées en extraits secs, d'un organosiliconate alcalin ou alcalino-terreux en solution aqueuse,

(C) - 5 à 250 parties d'une charge minérale non siliceuse,

(D) - 0,01 à 3 parties d'un composé catalytique à l'étain, ladite dispersion ayant un pH compris entre 9 et 12, et une teneur en extraits secs d'au moins 40 %.

Les α,ω-(dihydroxy)polydiorganosiloxane doivent avoir une viscosité d'au moins 100 mPa.s à 25 °C, de préférence d'au moins 50 000 mPa.s.

C'est en effet pour des viscosités supérieures à 50 000 mPa.s que l'on obtient un élastomère présentant un ensemble de propriétés mécaniques convenables, en particulier au niveau de la dureté Shore A et de l'allongement.

En outre plus la viscosité est élevée et plus les propriétés mécaniques se conservent lors du vieillissement de l'élastomère.

Les viscosités préférées pour la présente invention sont comprises entre 50 000 et 1 500 000 mPa.s à 25 °C.

Les radicaux organiques des α,ω-(dihydroxy)polydiorganopolysiloxanes sont des radicaux hydrocarbonés monovalents contenant jusqu'à 6 atomes de carbone, éventuellement substitué par des groupes cyano ou fluoro. Les substituants généralement utilisés du fait de leur disponibilité dans les produits industriels sont les radicaux méthyle, éthyle, propyle, phényle, vinyle et 3,3,3-trifluoropropyle. En général au moins 80 % en nombre de ces radicaux sont des radicaux méthyle.

Dans le cadre de la présente invention on préfère plus spécialement utiliser les α,ω-(dihydroxy)polydiorganosiloxanes préparés par le procédé de polymérisation anionique décrit dans les brevets américains précités : US-A-2891 920 et surtout US-A-3 294 725 (cités comme référence). Le polymère obtenu est stabilisé anioniquement par un agent tensio-actif qui, conformément à l'enseignement de US-A-3 294 725 est de préférence le sel d'un métal alcalin d'un acide hydrocarboné aromatique sulfonique, l'acide libre jouant également le rôle de catalyseur de polymérisation.

Le catalyseur et l'agent tensio-actif préférés sont l'acide dodécylbenzènesulfonique et ses sels de métaux alcalins, en particulier son sel de sodium. On peut ajouter éventuellement d'autres agents tensio-actifs anioniques ou non-ioniques. Toutefois cet ajout n'est pas nécessaire car, conformément à l'enseignement de US-A-3 294 725, la quantité d'agent tensio-actif anionique résultant de la neutralisation de l'acide sulfonique est suffisante pour stabiliser l'émulsion de polymère. Cette quantité est généralement inférieure à 3 % de préférence 1,5 % du poids de l'émulsion.

Ce procédé de polymérisation en émulsion est particulièrement intéressant car il permet d'obtenir directement l'émulsion (A). Par ailleurs ce procédé permet de pouvoir obtenir sans difficulté des émulsions (A) de α,ω-(dihydroxy)polydiorgosiloxane de très haute viscosité.

Pour préparer l'émulsion (A) on peut également partir d'α,ω-(dihydroxy)polydiorgosiloxane déjà polymérisé, puis le mettre en émulsion aqueuse en stabilisant les émulsions par un agent tensio-actif anionique et/ou non-ionique suivant un procédé bien connu de l'homme de métier et décrit en détail dans la littérature (voir par exemple les brevets FR-A-2 064 563, FR-A-2 094 322, FR-A-2 114 230 et EP-A-169 098).

EP 0 332 544 B1

Selon ce procédé, on mélange par simple agitation les polymères α,ω-(dihydroxy)polydiorganosiloxane avec l'agent tensio-actif anionique ou non-ionique, ce dernier pouvant être en solution aqueuse, à ajouter ensuite si nécessaire de l'eau et à transformer l'ensemble en une émulsion fine et homogène par passage dans un broyeur classique à colloïdes.

Par la suite le broyat obtenu est dilué par une quantité d'eau appropriée et on obtient ainsi une émulsion (A) stabilisée par un agent tensio-actif anionique ou non-ionique stable au stockage.

La quantité d'agent tensio-actif anionique et non-ionique utilisable est celle utilisée couramment pour la mise en oeuvre du procédé de mise en émulsion, en particulier ceux décrits dans les brevets précités et dans le brevet US-A-2 891 920.

Dans le cadre de la présente invention les agents tensio-actifs anioniques préférés sont le sel d'un métal alcalin d'un acide hydrocarboné aromatique sulfonique et les agents tensio-actifs non-ioniques préférés sont les alkylphénols polyoxyéthylénés. Ces agents tensio-actifs non-ioniques sont bien entendu les mêmes que ceux que l'on peut ajouter éventuellement aux émulsions (A) obtenues par polymérisation en émulsion comme indiqué plus haut.

L'émulsion (A) préparée par polymérisation en émulsion ou par mise en émulsion du polymère silicone se présente sous la forme d'une émulsion huile dans l'eau et a, de préférence, une teneur en extrait sec d'au moins 45 % en poids.

Pour 100 parties d'émulsion (A), on incorpore de 0,1 à 15, de préférence de 0,5 à 5, parties, calculées en extraits secs, d'un organosiliconate alcalin ou alcalino-terreux en solution aqueuse.

Ces organosiliconates alcalins ou alcalino-terreux sont des produits connus dont la plupart sont disponibles dans le commerce. Les plus courants sont les méthylsiliconates de sodium ou de potassium à environ 30 à 60% d'extraits secs.

Les organosiliconates alcalins peuvent être préparés par exemple par hydrolyse des organosilanes correspondants présentant 3 groupes hydrolysables, tels que des atomes d'halogènes des radicaux alcoxy, suivi d'une dissolution du produit obtenu dans une solution d'une base inorganique forte, dans des proportions telles qu'il y ait au moins un équivalent en base par atome de silicium (voir par exemple US-A-2 441 422, US-A-2 441 423 et US-A-2 507 200).

Un autre constituant de la dispersion selon l'invention est l'addition de 5 à 250, de préférence de 10 à 200 parties d'une charge minérale semi-renforçante ou de bourrage (C).

Les charges (C) ont une granulométrie généralement comprise entre 0,001 et 300 $\mu$m et une surface BET inférieure à 100 m$^2$/g.

Des exemples de charges (C) utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte.

Ces charges (C) sont introduites dans l'émulsion sous forme de poudre sèche par exemple par simple mélange.

Selon une variante de l'invention, on a découvert que si la charge (C) n'est sensiblement constituée que d'une charge choisie parmi l'alumine hydratée, la vermiculite expansée, la vermiculite non expansée selon une teneur de 5 à 250, de préférence de 50 à 200 parties pour 100 parties d'émulsion (A) on obtient un élastomère ayant une résistance à la flamme particulièrement élevée quine peut pas être obtenue avec les autres catégories de charge (C) précitées, en particulier avec l'oxyde d'aluminium ou alumine non hydratée. On peut également incorporer des fibres céramiques ou d'aramide selon l'enseignement de EP-A-212 827.

Le constituant (D) est un composé catalytique à l'étain généralement un sel d'organoétain introduit de préférence sous forme d'une émulsion aqueuse. Les sels d'organoétain utilisables sont décrits, en particulier dans l'ouvrage de NOLL, Chemistry and Technology of Silicones Academic Press (1968), page 337.

On peut également utiliser comme composé catalytique à l'étain le produit de réaction d'un sel d'étain, en particulier d'un di-carboxylate d'étain sur du polysilicate d'éthyle, comme décrit dans le brevet US-A-3 862 919.

On peut également utiliser le produit de réaction d'un silicate d'alkyle ou d'un alkyltrialcoxysilane sur le diacétate de dibutylétain comme décrit dans le brevet belge BE-A-842 305.

Les sels d'étain préférés sont les bischelates d'étain (EP-A-147 323 et EP-A-235 049), les dicarboxylates de diorganoétain et en particulier les diversatates de dibutyl- ou de dioctylétain (brevet britannique GB-A-1 289 900), le diacétate de dibutyl- ou de dioctylétain, le dilaurate de dibutyl- ou de dioctylétain. On utilise de 0,01 à 3, de préférence de 0,05 à 2 parties de sel d'organoétain pour 100 parties de (A).

Selon une variante, on peut incorporer en outre, pour 100 parties d'émulsion (A) un additif silicié (E) choisi parmi du silicate de soude (0,3 à 30 parties), et une charge siliceuse renforçante ou semi-renforçante (1 à 150 parties).

Ces charges siliceuses sont choisies parmi la silice colloïdale, les poudres de silice de combustion et de précipitation ou leur mélange. La silice de combustion est préférée. On peut toutefois utiliser également des charges siliceuses semi-renforçantes telles que des terres de diatomées, du quartz broyé.

Pour 100 parties d'émulsion (A), la somme des parties de (C) + (E) doit être inférieure à 300 parties.

Ces poudres de silice sont bien connues, elles sont utilisées en particulier comme charges dans les compositions élastomère de silicone, vulcanisables à chaud en un caoutchouc de silicone. Ces poudres présentent une taille moyenne de particule généralement inférieure à 0,1 μm et une surface spécifique BET supérieure à 50 m²/g, de préférence comprise entre 150 et 350 m²/g.

L'incorporation dans l'émulsion (A) de cet additif silicié (E), par tout moyen convenable, en particulier par agitation, augmente considérablement la viscosité de l'émulsion (A) qui présente alors un caractère pâteux.

On a en effet trouvé, conformément à la présente invention que l'addition de cet additif silicié (E), est suffisante pour conférer à la dispersion un caractère "thioxotrope" plus ou moins marqué. La dispersion, extraite par exemple d'une cartouche de stockage, adhère sans s'écouler sur un substrat même vertical et durcit en élastomère par évaporation de l'eau à température ambiante. On peut également obtenir une émulsion non coulante en utilisant comme charge (C) du carbonate de calcium dont le diamètre particulaire moyen est inférieur à 0,1 μm. Bien entendu un léger chauffage (à 40-80 °C environ) de la composition pour accélérer l'évaporation de l'eau n'est pas exclu du cadre de l'invention.

Aux dispersions conformes à la présente invention peuvent être éventuellement ajoutés divers additifs permettant de modifier les propriétés de dispersions et des élastomères formés à partir des dispersions par élimination de l'eau.

On peut incorporer en particulier un additif (F), choisi parmi les organotrialcoxysilanes, comme par exemple le vinyltriméthoxysilane, les silicates d'alkyle tels que le silicate de méthyle ou le silicate d'éthyle ou leur produit d'hydrolyse partielle, c'est-à-dire les polysilicates d'alkyle tels que le polysilicate de méthyle et le polysilicate d'éthyle à une teneur de 0,1 à 20 parties d'additif (F) pour 100 parties d'émulsions (A). L'additif (F) permet d'améliorer la cohésion du matériau élastomère obtenu après élimination de l'eau.

Les organotrialcoxysilanes et les silicates d'alkyle répondent de préférence à la formule générale :

$$R'_aSi(OR)_{4-a}$$

dans laquelle R est un radical alkyle ayant de 1 à 4 atomes de carbone, R' est R ou vinyle et a est 1 ou 0.

Comme autres exemples d'additifs on peut citer les antifongiques, les antimousses ainsi que les agents thixotropants comme la carboxyméthylcellulose, la gomme xanthane et l'alcool polyvinylique.

Les dispersions selon l'invention peuvent être utilisées pour la réalisation de joints élastomères silicones, en particulier pour le bâtiment.

Ces dispersions sont également utilisables pour l'enrobage de divers principes actifs pharmaceutiques ou phytosanitaires formulés sous une forme solide (pastilles, tablettes, pillules, etc .....), pour l'enduction de bouchons de liège utilisés pour obturer les bouteilles de vins et de spiritueux, pour réaliser des revêtements d'objets culinaires et, de façon générale, d'objets en contact avec des aliments (par exemple des moules à pain).

Les techniques connues d'enrobage, sont utilisables en particulier les techniques d'enduction au pinceau et au trempé (par immersion), les techniques de pulvérisation, les techniques d'enrobage en lit fluidisé et les techniques d'enduction par immersion.

Pour les revêtements de bouchons de liège, une technique recommandée est la technique au trempé qui consiste à immerger les bouchons dans la dispersion qui mouille la surface du bouchon, puis à évaporer l'eau.

Le revêtement obtenu représente 20 à 50 mg d'élastomère pour 100 cm² de surface de bouchon. Cette couche facilite le glissement du bouchon dans le goulot de la bouteille lors de l'embouteillage et évite le "coulage", c'est-à-dire des fuites de liquide entre le goulot et le bouchon.

Les dispersions selon l'invention peuvent être préparées de la façon suivante :

On part d'une émulsion (A) préparée soit par le procédé de polymérisation en émulsion et l'on dispose d'une émulsion stabilisée par un agent tensio-actif anionique et éventuellement non-ionique, soit par le procédé de mise en émulsion de l'α,ω-(dihydroxy)polydiorganosiloxane et l'on dispose d'une émulsion stabilisée par un agent tensio-actif anionique et/ou non-ionique.

A 100 parties de cette émulsion (A) on mélange tout d'abord 0,1 à 15 parties d'organosiliconate (B) puis 0,01 à 3 parties du composé catalytique à l'étain (D) et enfin 5 à 250 parties de charge (C).

On ajoute éventuellement à ce mélange l'additif silicié (E) et l'additif (F).

En général on obtient une dispersion présentant directement un pH supérieur à 8,5. Si ce n'est pas le cas ou si on souhaite augmenter le pH, on règle le pH en ajoutant un acide ou une base minérale ou organique.

Comme base organique, on peut utiliser les amines primaires telles que la diéthylamine. Cependant, selon un mode de réalisation préféré de l'invention, on règle le pH à la valeur souhaitée au moyen d'une quantité adaptée d'une base minérale introduite sous la forme d'une solution aqueuse choisie de préférence parmi les solutions d'hydroxydes alcalins et alcalino-terreux telles que la soude, la potasse, les solutions d'hydroxyde de calcium et d'hydroxyde de baryum. Toutefois les hydroxydes alcalins et alcalino-terreux peuvent être introduits directement sous une forme solide comme l'hydroxyde de magnésium.

Les constituants (A), (B), (C), (D) et éventuellement (E) et (F) sont mélangés en des quantités telles que la dispersion finale présente une teneur en extrait sec supérieure à 40 %, de préférence supérieure à 60 %, mais généralement inférieure à 90 %. La zone de pH préférée est comprise entre 9 et 12.

Les dispersions selon l'invention peuvent être utilisées comme peinture réticulable en couche mince. Elles présentent alors, de préférence, un extrait sec compris entre 40 et 70 %.

Pour déterminer la teneur en extrait sec on place 2 g de dispersion dans une coupelle de pesage en aluminium et on la chauffe une heure à 150 °C dans un four à circulation d'air. Après refroidissement on pèse à nouveau la coupelle et on détermine le pourcentage de matière restante sur les 2 g initiaux qui représente la teneur en extrait sec.

Selon une variante préférée, la dispersion selon l'invention, après sa préparation, subit une étape de maturation de préférence à pH supérieur à 8,5, éventuellement par chauffage à une température de 20 °C et 60 °C pendant une durée généralement d'au moins une heure et généralement inférieure à 72 heures.

Plus la température de maturation est élevée et plus la durée de maturation peut être courte.

Cette étape de maturation permet d'obtenir, après élimination de l'eau, un élastomère ayant immédiatement des propriétés mécaniques appropriées.

Dans ce qui suit ou ce qui précède, sauf mentions contraires, les pourcentages et parties sont en poids.

- EXEMPLE 1 :

On prépare une émulsion (A) d'huile $\alpha,\omega$-(dihydroxy)polydiméthylsiloxane par polymérisation en émulsion en présence d'acide dodécylbenzènesulfonique libre et de son sel de sodium.

L'huile contenue dans l'émulsion a une viscosité de $10^6$ mPa.s à 25 °C. L'émulsion (A) obtenue comporte pour 100 parties d'émulsion, 1,5 parties de sel de sodium de l'acide dodécylbenzènesulfonique (DBSNa) et un extrait sec de 58 %.

A 173 parties d'émulsion (A) on ajoute et on homogénéise à 25 °C, tout d'abord 7 parties de méthylsiliconate de potassium à 40 % d'extrait sec puis 2,6 parties d'une émulsion à base d'étain contenant 40 % en poids de dilaurate de dioctylétain (D).

Après 10 minutes d'homogénéisation, on ajoute 150 parties de $CaCO_3$ de granulométrie moyenne de 5 $\mu$m.

La dispersion finale a une teneur en extrait sec de 70 % et présente directement un pH supérieur à 9.

Sur cette dispersion coulante on effectue une maturation à 25 °C pendant 48 heures.

On prépare les films (feuils) en étendant la dispersion, éventuellement après maturation, sur une surface plane et on laisse l'eau s'évaporer à la température ambiante.

Sur les pellicules séchées, 7 jours à température ambiante, on mesure les propriétés mécaniques moyennes suivantes :

– la dureté Shore A (DSA) selon la norme ASTM-D-2240,

– la résistance à la rupture (R/R) selon la norme AFNORT-T 46 002 correspondant à la norme ASTMD 412, en Mpa.s,

– l'allongement à la rupture (A/R) en % selon la norme AFNOR-T 46 002,

– le module élastique (ME) à 100 % d'allongement selon la norme AFNOR-T 46 002.

La composition de la dispersion et les propriétés mécaniques obtenues sont rassemblées dans le tableau 1 ci-après.

L'élastomère obtenu présente une bonne adhérence sur verre, béton et aluminium.

Pour apprécier l'adhérence, on dépose sur un support en verre ou en béton, un cordon de dispersion aqueuse de 4 mm d'épaisseur. Après 12 jours, on apprécie l'adhérence de l'élastomère formé en tirant manuellement sur le cordon. L'adhérence est bonne sur les deux supports, le cordon n'ayant pu être décollé manuellement de son support.

- EXEMPLE 2 :

On suit exactement le mode opératoire de l'exemple 1 sauf que :

– le tensio-actif utilisé est un mélange pondéral 50/50 d'acide dodécylbenzènesulfonique (ADBS) et un mélange pondéral 70/30 de 2-nonylphénols polyoxyéthylénés, l'un ayant 10 motifs $OCH_2CH_2$ et l'autre 20 motifs $OCH_2CH_2$ (NPP),

– la viscosité de l'huile est de 85 000 mPa.s, l'extrait sec de l'émulsion (A) est de 58 %,

– le carbonate de calcium est remplacé par de l'alumine hydratée de granulométrie moyenne de 100 $\mu$m. La dispersion obtenue est coulante.

La composition de la dispersion et les propriétés mécaniques obtenues sont rassemblées dans le tableau 1 ci-après.

L'élastomère obtenu présente une bonne adhérence sur verre, béton et aluminium et un caractère auto-extinguible remarquable.

- EXEMPLE 3 :

On suit exactement le mode opératoire de l'exemple 1 sauf que :
– la viscosité de l'huile est de 85 000 mPa.s, l'extrait sec de l'émulsion (A) est de 58 %,
– les 150 parties de carbonate de calcium de granulométrie moyenne de 5 µm sont remplacées par 150 parties de carbonate de calcium de granulométrie moyenne de 0,08 µm.

La dispersion obtenue est non coulante.

La composition de la dispersion et les propriétés mécaniques obtenues sont rassemblées dans le tableau 1 ci-après.

L'élastomère obtenu présente une bonne adhérence sur verre, béton et aluminium.

Sur trois autres lots de pellicules séchées, on mesure les A/R, DSA et ME, respectivement après vieillissement naturel 7 mois à température ambiante (20 °C), après vieillissement accéléré en étuve ventilée 7 jours à 50 °C et après vieillissement accéléré 42 jours à 50 °C.

Les résultats obtenus sont rassemblés dans le tableau 2 ci-après.

- EXEMPLE 4 :

On suit exactement le mode opératoire de l'exemple 1, sauf que :
– l'on utilise comme catalyseur à l'étain le produit de réaction de une mole d'oxyde de dioctylétain sur une mole d'acide versatique® avec élimination de l'eau formée. Le produit de réaction est mis en émulsion. Cette émulsion contient 8,55 % en poids d'étain métal,
– les 150 parties de carbonate de calcium de granulométrie moyenne de 5 µm sont remplacées par 150 parties de carbonate de calcium de granulométrie moyenne de 0,08 µm.

La dispersion obtenue est non coulante. La composition de la dispersion et les propriétés mécaniques obtenues sont rassemblées dans le tableau 1 ci-après.

L'élastomère obtenu présente une bonne adhérence sur verre, béton et aluminium.

Sur un lot de pellicules séchées on mesure les DSA, R/R et A/R après vieillissement 28 jours à 50 °C.

Les valeurs trouvées sont : DSA : 25, R/R : 0,97 MPa et A/R : 428 %.

- EXEMPLE 5 :

On suit exactement le mode opératoire de l'exemple 1, sauf que :
– l'huile silicone de l'émulsion (A) présente une viscosité de $10^6$ mPa.s à 25 °C et une teneur en extrait sec de 58,6 %,
– les 150 parties de carbonate de calcium de granulométrie moyenne de 5 µm sont remplacées par 100 parties de carbonate de calcium de granulométrie moyenne de 0,08 µm.

La dispersion obtenue est non coulante.

La composition de la dispersion et les propriétés mécaniques obtenues sont rassemblées dans le tableau 1 ci-après.

L'élastomère obtenu présente une bonne adhérence sur verre, béton et aluminium.

Sur un lot de pellicules séchées on mesure les DSA, R/R et A/R après vieillissement naturel 8 mois à température ambiante (20 °C).

Les valeurs trouvées sont : DSA : 16, R/R : 0,88 MPa et A/R : 428 %.

TABLEAU 1

| | EXEMPLES | 1 | 2 | 3 | 4 | 5 |
|---|---|---|---|---|---|---|
| parties en poids | Emulsion (A) | 173 | 173 | 173 | 173 | 173 |
| | Siliconate (B) | 7 | 7 | 7 | 7 | 7 |
| | Emulsion d'étain (D) | 2,6 | 2,6 | 2,6 | 2,6 | 2,6 |
| | Carbonate de calcium (5 µm) | 150 | – | – | – | – |
| | Carbonate de calcium (0,08 µm) | – | – | 150 | 150 | 100 |
| | Alumine hydratée (100 um) | – | 150 | – | – | – |
| pH de l'émulsion | | › 9 | › 9 | › 9 | › 9 | › 9 |
| Maturation (en heures) à 25 °C | | 48 | 48 | 48 | 48 | 48 |
| DSA | | 8 | 18 | 22 | 20 | 27 |
| R/R (MPa.s) | | 0,36 | 0,29 | 1,50 | 1,33 | 2,57 |
| A/R (%) | | 1 160 | 80 | 915 | 910 | 1 257 |

EP 0 332 544 B1

TABLEAU 2

|  | A/R (%) | DSA | ME (MPa) |
|---|---|---|---|
| Après 7 jours à 20 °C | 915 | 22 | 0,35 |
| Après 7 mois à 20 °C | 670 | 19 | 0,20 |
| Après 7 jours à 50 °C | 680 | 20 | 0,25 |
| Après 42 jours à 50 °C | 420 | 18 | 0,19 |

## Revendications

1. Dispersion aqueuse de silicone, réticulant en un élastomère par élimination de l'eau dans les conditions ambiantes, caractérisée en ce qu'elle comporte, en poids :

(A) - 100 parties en poids d'une émulsion du type huile dans eau d'un $\alpha,\omega$-(dihydroxy)polydiorganosiloxane ayant une viscosité d'au moins 100 mPa.s à 25 °C stabilisée par au moins un agent tensio-actif choisi parmi les agents tensio-actifs anioniques et non-ioniques et leurs mélanges,

(B) - 0,1 à 15 parties en poids, calculées en extraits secs, d'un organosiliconate alcalin ou alcalino-terreux en solution aqueuse,

(C) - 5 à 250 parties en poids d'une charge minérale non siliceuse,

(D) - 0,01 à 3 parties en poids d'un composé catalytique à l'étain,

ladite dispersion ayant un pH compris entre 9 et 12 et une teneur en extrait sec d'au moins 40 %.

2. Dispersion selon la revendication 1, caractérisée en ce que le sel d'étain (D) se trouve sous forme d'une émulsion aqueuse.

3. Dispersion de silicone selon la revendication 1 ou 2, caractérisée en ce que l'émulsion (A) a une teneur en extrait sec d'au moins 45 % en poids.

4. Dispersion de silicone selon l'une quelconque des revendications précédentes, caractérisée en ce que la charge (C) est choisie parmi l'alumine hydratée, l'alumine, le carbonate de calcium, la vermiculite expansée, la vermiculite non expansée, le noir de carbone, l'oxyde de zinc, le dioxyde de titane, le mica, le talc, l'oxyde de fer, le sulfate de baryum et la chaux éteinte.

5. Dispersion de silicone selon la revendication 4, caractérisée en ce que le carbonate de calcium a un diamètre particulaire moyen inférieur à 0,1 $\mu$m.

6. Dispersion de silicone selon l'une quelconque des revendications précédentes, caractérisée en ce qu'elle comporte :

(A) : 100 parties de l'émulsion du type huile dans eau d'un $\alpha,\omega$-(dihydroxy)polydiorganosiloxane de viscosité à 25 °C comprise entre 50 000 et 1 500 000 mPa.s et est stabilisée par un agent tensio-actif choisi parmi un sel de métal alcalin d'un acide hydrocarboné aromatique sulfonique et les alkylphénols polyoxyéthylénés.

(B) : 0,5 à 5 parties d'un organosiliconate,

9

(C) : 10 à 200 parties d'une charge minérale,

(D) : 0,05 à 2 parties d'un dicarboxylate de diorganoétain,

    ladite dispersion ayant un pH compris entre 9 et 12 et une teneur en extraits secs d'au moins 60 %.

7. Dispersion de silicone selon l'une quelconque des revendications précédentes, caractérisée en ce qu'elle comporte en outre pour 100 parties d'une émulsion (A), un additif silicié (E) choisi parmi le silicate de soude (0,3 à 30 parties), et une charge siliceuse renforçante ou semi renforçante (1 à 150 parties), sous réserve que pour 100 parties de (A), la somme des parties de (C) + (E) soit inférieure à 300 parties.

8. Dispersion de silicone selon l'une quelconque des revendications précédentes, caractérisée en ce qu'elle comporte en outre, pour 100 parties d'émulsion (A), de 0,01 à 20 parties en poids d'un additif (F) choisi parmi les organotrialcoxysilanes, les silicates d'alkyle et les polysilicates d'alkyle.

9. Procédé de préparation d'une dispersion de silicone telle que définie à l'une quelconque des revendications 1 à 8, caractérisée en ce que :

1) - on mélange l'émulsion (A), et l'organosiliconate (B),

2) - on ajoute la charge non siliceuse (C) et le catalyseur (D) et éventuellement l'additif silicié (E) et l'additif (F),

3) - on règle éventuellement le pH à une valeur comprise entre 9 et 12, la quantité d'eau totale utilisée étant telle que la teneur en matières solides de la dispersion finale obtenue soit d'au moins 40 %.

10. Procédé selon la revendication 9, caractérisé en ce que la dispersion obtenue, avant son conditionnement à l'abri de l'air, subit une étape de maturation à une température comprise entre 20 et 60 °C pendant une durée qui est d'au moins une heure et inférieure à 72 heures.

11. Elastomère obtenu par durcissement par évaporation de l'eau d'une dispersion telle que définie à l'une quelconque des revendications 1 à 8.

12. Utilisation d'une dispersion aqueuse telle que définie à l'une quelconque des revendications 1 à 8, pour l'enduction et l'enrobage de principes actifs pharmaceutiques ou phytosanitaires et pour la réalisation de revêtements d'objets en contact avec des aliments.

13. Utilisation selon la revendication 12, caractérisée en ce que lesdits objets en contact avec des aliments sont des bouchons de liège pour le conditionnement de vins et spiritueux.

## Claims

1. Aqueous silicone dispersion crosslinking to an elastomer by elimination of water in ambient conditions, characterised in that it comprises, by weight:

(A) - 100 parts by weight of an emulsion of the oil-in-water type of an $\alpha,\omega$-(dihydroxy)polydiorganosiloxane with a viscosity of at least 100 mPa s at 25°C, stabilised with at least one surface-active agent chosen from anionic and nonionic surface-active agents and mixtures thereof,

(B) - 0.1 to 15 parts by weight, calculated on a solids content basis, of an alkali metal or alkaline-earth metal organosiliconate in aqueous solution,

(C) - 5 to 250 parts by weight of a nonsiliceous inorganic filler,

(D) - 0.01 to 3 parts by weight of a catalytic tin compound,

    the said dispersion having a pH of between 9 and 12 and a solids content of at least 40%.

2. Dispersion according to Claim 1, characterised in that the tin salt (D) is in the form of an aqueous emulsion.

3. Silicone dispersion according to Claim 1 or 2, characterised in that the emulsion (A) has a solids content of at least 45% by weight.

4. Silicone dispersion according to any one of the preceding claims, characterised in that the filler (C) is chosen from hydrated alumina, alumina, calcium carbonate, expanded vermiculite, unexpanded vermiculite, carbon black, zinc oxide, titanium dioxide, mica, talc, iron oxide, barium sulphate and slaked lime.

5. Silicone dispersion according to Claim 4, characterised in that the calcium carbonate has a mean particle diameter of less than 0.1 $\mu$m.

6. Silicone dispersion according to any one of the preceding claims, characterised in that it comprises:

(A) : 100 parts of the emulsion of the oil-in-water type of an $\alpha,\omega$-(dihydroxy)polydiorganosiloxane with a viscosity at 25°C of between 50,000 and 1,500,000 mPa s and is stabilised with a surface-active agent chosen from an alkali metal salt of an aromatic hydrocarbon sulphonic acid and polyoxyethylenated alkylphenols,

(B) : 0.5 to 5 parts of an organosiliconate,

(C) : 10 to 200 parts of an inorganic filler,

(D) : 0.05 to 2 parts of a diorganotin dicarboxylate,

the said dispersion having a pH of between 9 and 12 and a solids content of at least 60%.

7. Silicone dispersion according to any one of the preceding claims, characterised in that it additionally comprises, per 100 parts of an emulsion (A), a siliceous additive (E) chosen from sodium silicate (0.3 to 30 parts), and a reinforcing or semireinforcing siliceous filler (1 to 150 parts), provided that the sum of the parts of (C) + (E) is less than 300 parts per 100 parts of (A).

8. Silicone dispersion according to any one of the preceding claims, characterised in that it additionally comprises, per 100 parts of emulsion (A), from 0.01 to 20 parts by weight of an additive (F) chosen from organotrialkoxysilanes, alkyl silicates and alkyl polysilicates.

9. Process for the preparation of a silicone dispersion as defined in any one of Claims 1 to 8, characterised in that:

1) - the emulsion (A) and the organosiliconate (B) are mixed,

2) - the nonsiliceous filler (C) and the catalyst (D) and, if desired, the siliceous additive (E) and the additive (F) are added,

3) - the pH is adjusted, if desired, to a value of between 9 and 12, the total quantity of water employed being such that the solids content of the final dispersion obtained is at least 40%.

10. Process according to Claim 9, characterised in that, before being packaged in the absence of air, the dispersion obtained is subjected to a maturing stage at a temperature of between 20 and 60°C for a period lasting at least one hour and less than 72 hours.

11. Elastomer obtained by curing by evaporation of water from a dispersion as defined in any one of Claims 1 to 8.

12. Use of an aqueous dispersion as defined in any one of Claims 1 to 8 for coating and encapsulating pharmaceutical or plant-protective active substances and for producing coatings for articles in contact with foodstuffs.

13. Use according to Claim 12, characterised in that the said articles in contact with foodstuffs are cork stoppers for packaging wines and spirits.


**Patentansprüche**

1. Wäßrige Silicondispersion, die durch Eliminlerung von Wasser unter Umgebungsbedingungen zu einem Elastomeren vernetzt, dadurch gekennzeichnet, daß sie, auf das Gewicht bezogen, enthält

(A) 100 Gew.Teile einer Emulsion vom Typ Öl-in-Wasser eines α,ω-(Dihydroxy)-polydiorganosiloxans mit einer Viskosität von zumindest 100 mPa.s bei 25°C, die mit zumindest einem oberflächenaktiven Mittel, ausgewählt unter den anionischen und nicht-ionischen oberflächenaktiven Mitteln und deren Gemischen, stabilisiert ist,

(B) 0,1 bis 15 Gew.Teile, berechnet als Trockenextrakt, eines Alkali- oder Erdalkali-organosiliconats in wäßriger Lösung,

(C) 5 bis 250 Gew.Teile eines nicht-siliciumhaltigen, mineralischen Füllstoffs,

(D) 0,01 bis 3 Gew.Teile einer katalytischen Zinnverbindung,

wobei die Dispersion einen pH zwischen 9 und 12 und einen Trockenextraktgehalt von zumindest 40% aufweist.

2. Dispersion gemäß Anspruch 1, dadurch gekennzeichnet, daß das Zinnsalz (D) in Form einer wäßrigen Emulsion vorliegt.

3. Silicondispersion gemäß Anspruch 1 oder 2, dadurch gekennzeichnet, daß die Emulsion (A) einen Trockenextraktgehalt von zumindest 45 Gew,% besitzt.

4. Silicondispersion gemäß einem der vorhergehenden Anprüche, dadurch gekennzeichnet, daß der Füllstoff (C) unter hydratisiertem Aluminiumoxid, Aluminiumoxid, Calciumcarbonat, expandiertem Vermiculit, nicht-expandiertem Vermiculit, Ruß, Zinkoxid, Titandioxid, Glimmer, Talk, Eisenoxid, Bariumsulfat und Löschkalk ausgewählt ist.

5. Silicondispersion gemäß Anspruch 4, dadurch gekennzeichnet, daß das Calciumcarbonat einen durchschnittlichen Teilchendurchmesser von geringer als 0,1 μm besitzt.

6. Silicondispersion gemäß einem der vorhergehenden Ansprüche, dadurch gekennzeichnet, daß sie enthält

(A) 100 Teile Emulsion des Typs Öl-in-Wasser eines α,ω-(Dihydroxy)-polydiorganosiloxans mit einer Viskosität bei 25°C zwischen 50 000 und 1 500 000 mPa.s, die mit einem oberflächenaktiven Mittel, ausgewählt unter einem Alkalimetallsalz einer aromatischen Kohlenwasserstoff-sulfonsäure und den polyoxyethylenierten Alkylphenolen, stabilisiert ist,

(B) 0,5 bis 5 Teile eines Organosiliconats,

(C) 10 bis 200 Teile eines mineralischen Füllstoffs,

(D) 0,05 bis 2 Teile eines Diorganozinndicarboxylats,

wobei die Dispersion einen pH zwischen 9 und 12 und einen Trockenextraktgehalt von zumindest 60% besitzt.

7. Silicondispersion gemäß einem der vorhergehenden Ansprüche, dadurch gekennzeichnet, daß sie außerdem je 100 Teile einer Emulsion (A) ein siliciumhaltiges Additiv (E), ausgewählt unter Natriumsilicat (0,3 bis 30 Teile) und einem verstärkenden oder halbverstärkenden, siliciumhaltigen Füllstoff (1 bis 150 Teile), enthält, mit der Maßgabe, daß je 100 Teile (A) die Summe der Teile (C) + (E) geringer als 300 Teile ist.

8. Silicondispersion gemäß einem der vorhergehenden Ansprüche, dadurch gekennzeichnet, daß sie außerdem je 100 Teile Emulsion (A) 0,01 bis 20 Gew.Teile eines Additivs (F), ausgewählt unter den Organotrialkoxysilanen, den Alkylsilicaten und den Alkylpolysilicaten, enthält.

9. Verfahren zur Herstellung einer Silicondispersion, wie in einem der Ansprüche 1 bis 8 definiert, dadurch gekennzeichnet, daß

(1) man die Emulsion (A) und das Organosiliconat (B) mischt,

(2) man den nicht-siliciumhaltigen Füllstoff (C) und den Katalysator (D) und gegebenenfalls das siliciumhaltige Additiv (E) und das Additiv (F) zuführt,

(3) man gegebenenfalls den pH auf einen Wert zwischen 9 und 12 einstellt, wobei die verwendete Gesamtmenge Wasser derart ist, daß der Gehalt an Feststoffen der letztendlich erhaltenen Dispersion zumindest 40% beträgt.

10. Verfahren gemäß Anpruch 9, dadurch gekennzeichnet, daß die erhaltene Dispersion vor ihrer Konditionierung unter Luftausschluß eine Reifungsstufe bei einer Temperatur zwischen 20 und 60°C während einer Zeitdauer erfährt, die zumindest 1 Stunde und weniger als 72 Stunden beträgt.

11. Elastomeres, erhalten durch Härten durch Verdampfen des Wassers einer Dispersion, wie in einem der Ansprüche 1 bis 8 definiert.

12. Verwendung einer wäßrigen Dispersion, wie in einem der Ansprüche 1 bis 8 definiert, zum Überziehen und Umhüllen von pharmazeutischen und phytosanitären Wirkstoffen und für die Herstellung von Gegenständen in Kontakt mit Nahrungsmitteln.

13. Verwendung gemäß Anspruch 12, dadurch gekennzeichnet, daß die Gegenstände in kontakt mit Nahrungsmitteln Korkpfropfen für die Nachgärung von Weinen und Spirituosen sind.